# EUROPEAN PATENT APPLICATION

(11) **EP 4 815 285 A1**
(43) Date of publication of application: **30.09.2026**
(21) Application number: 26167984.9
(22) Date of filing: 26.03.2026
(51) Int. Cl.: H02M 1/32, H02S 50/10, H02J 3/38, H02S 50/00, H02M 1/00

(54) **PHOTOVOLTAIC INVERTER AND CONTROL METHOD THEREOF**

(30) Priority: 27.03.2025 CN 202510387221
(71) Applicant: HUAWEI TECHNOLOGIES CO., LTD., Shenzhen 518129 (CN)
(72) Inventor: CHEN, Yue, 518129 Shenzhen (CN); LIU, Yongquan, 518129 Shenzhen (CN); ZHANG, Jiangteng, 518129 Shenzhen (CN)
(74) Representative: Isarpatent

(57) **Abstract**

This application discloses a photovoltaic inverter and a control method thereof, and relates to the field of energy technologies, to accurately detect a parallel impedance to ground of a photovoltaic array and the photovoltaic inverter, so as to control, based on the parallel impedance to ground, the photovoltaic inverter to be safely connected to a grid. The photovoltaic inverter includes a boost Boost circuit, a first resistor, a second resistor, a positive electrode of a direct current bus, a negative electrode of the direct current bus, an inverter circuit, and a controller. The controller in the photovoltaic inverter is configured to control, when a preset condition is met, an output voltage of an optimizer array to decrease, where the preset condition includes at least one of the following: a difference between a negative bus voltage and a bus voltage is greater than or equal to a preset threshold, or the output voltage of the optimizer array is greater than the bus voltage. The bus voltage is an absolute value of a voltage difference between the positive electrode of the direct current bus and the negative electrode of the direct current bus, and the negative bus voltage is an absolute value of a voltage difference between a protection ground cable and the negative electrode of the direct current bus.

## Description

### TECHNICAL FIELD

This application relates to the field of energy technologies, and in particular, to a photovoltaic inverter and a control method thereof.

### BACKGROUND

A photovoltaic inverter is configured to convert a variable direct current generated by a photovoltaic module into a stable alternating current with a mains frequency, and is one of important components in a photovoltaic system. A string-type photovoltaic system is widely used due to its advantages of effectively considering individual differences of all photovoltaic modules, preventing shadow blocking and hot spot effect of the photovoltaic modules during operation, and the like. To ensure that the photovoltaic inverter can be safely connected to a grid, a parallel impedance to ground of a photovoltaic array and the photovoltaic inverter may be detected, to determine whether the photovoltaic array has an insulation fault and a safety hazard. The parallel impedance to ground may be considered as an insulation impedance to ground of the photovoltaic array.

Currently, a single-relay insulation impedance detection solution may be used to calculate the insulation impedance to ground of the photovoltaic array. However, in some string-type photovoltaic systems, an optimizer array connected to the photovoltaic array is further included. In this case, due to restrictions of a hardware circuit and a calculation method, an insulation impedance to ground of a string-type photovoltaic array cannot be accurately detected. As a result, grid connection safety of the photovoltaic inverter cannot be ensured.

Based on this, how to accurately detect the parallel impedance to ground of the photovoltaic array and the photovoltaic inverter, and control, based on the parallel impedance to ground, the photovoltaic inverter to be safely connected to the grid becomes an urgent problem to be resolved.

### SUMMARY

This application provides a photovoltaic inverter and a control method thereof, to accurately detect a parallel impedance to ground of a photovoltaic array and a photovoltaic inverter, so as to control, based on the parallel impedance to ground, the photovoltaic inverter to be safely connected to a grid.

To achieve the foregoing objectives, the following technical solutions are used in embodiments of this application.

According to a first aspect, a photovoltaic inverter is provided, where the photovoltaic inverter includes a boost Boost circuit, a first resistor, a second resistor, a positive electrode of a direct current bus, a negative electrode of the direct current bus, an inverter circuit, and a controller. An input of the Boost circuit is configured to connect to an optimizer array, a positive output of the Boost circuit is connected to the positive electrode of the direct current bus, a negative output of the Boost circuit is connected to the negative electrode of the direct current bus, the first resistor is connected between the positive electrode of the direct current bus and a protection ground cable, the second resistor is connected between the protection ground cable and the negative electrode of the direct current bus, an input of the inverter circuit is separately connected to the positive electrode of the direct current bus and the negative electrode of the direct current bus, and an output of the inverter circuit is configured to connect to a power grid. The controller is configured to: control, when a preset condition is met, an output voltage of the optimizer array to decrease, where the preset condition includes at least one of the following: a difference between a negative bus voltage and a bus voltage is greater than or equal to a preset threshold, or the output voltage of the optimizer array is greater than the bus voltage. The bus voltage is an absolute value of a voltage difference between the positive electrode of the direct current bus and the negative electrode of the direct current bus, and the negative bus voltage is an absolute value of a voltage difference between the protection ground cable and the negative electrode of the direct current bus.

In the foregoing technical solution, before insulation impedance detection, the controller may sample the negative bus voltage and the bus voltage, and control, based on the obtained negative bus voltage and bus voltage, the output voltage of the optimizer array to decrease when a difference between the negative bus voltage and the bus voltage is greater than or equal to the preset threshold or the output voltage of the optimizer array is greater than the bus voltage. Then, international organization for standardization (international organization for standardization, ISO) insulation impedance detection is performed based on a decreased output voltage of the optimizer array, so that ISO insulation impedance detection can be performed in a complex scenario in which the optimizer array is included in the photovoltaic system at an optimal hardware circuit design cost, that is, by using fewer circuit devices. In comparison with the conventional technology in which detection and determining logic considers that there is no case in which the negative bus voltage is greater than the bus voltage, in this application, when the photovoltaic array is connected to the optimizer array, the output voltage of the optimizer array is adjusted, so that the parallel impedance to ground of the photovoltaic array and the photovoltaic inverter can be accurately detected, thereby ensuring accuracy and reliability of insulation impedance detection, and improving grid connection safety and reliability of the photovoltaic inverter.

With reference to the first aspect, in an implementation, the controller is specifically configured to: when the difference between the negative bus voltage and the bus voltage is greater than or equal to the preset threshold, output a first control signal, where the first control signal indicates a voltage adjustment coefficient of the optimizer array to decrease, so that the difference between the negative bus voltage and the bus voltage is less than the preset threshold.

Based on the foregoing solution, the controller outputs the first control signal to the optimizer array, to control the voltage adjustment coefficient of the optimizer array, so that a decrease of the output voltage of the optimizer array can be controlled, to decrease the difference between the negative bus voltage and the bus voltage. In addition, ISO insulation impedance detection is performed based on the output voltage of the bucked optimizer array, so that the parallel impedance to ground of the photovoltaic array and the photovoltaic inverter can be accurately detected, thereby ensuring accuracy and reliability of insulation impedance detection, and improving grid connection safety and reliability of the photovoltaic inverter.

With reference to the first aspect, in an implementation, the controller is further configured to: when the voltage adjustment coefficient is less than a preset coefficient and the difference between the negative bus voltage and the bus voltage is greater than or equal to the preset threshold, control the output of the inverter circuit to be disconnected from a power grid.

Based on the foregoing solution, after the controller controls the voltage adjustment coefficient of the optimizer array to decrease to the preset coefficient, if the difference between the negative bus voltage and the bus voltage is still greater than or equal to the preset threshold, it indicates that a current voltage is abnormal, and normal ISO insulation impedance detection cannot be performed, the controller may control the inverter circuit to be disconnected from the power grid, to ensure grid connection safety and reliability of the grid-connected inverter.

With reference to the first aspect, in an implementation, the controller is specifically configured to: when the output voltage of the optimizer array is greater than the bus voltage, output a second control signal, where the second control signal indicates the output voltage of the optimizer array to decrease to be less than or equal to the bus voltage.

Based on the foregoing solution, when the output voltage of the optimizer array is high, for example, the output voltage of the optimizer array is greater than the bus voltage, the controller outputs the second control signal to the optimizer array, to control the output voltage of the optimizer array to be less than or equal to the bus voltage, and then performs ISO insulation impedance detection based on the output voltage of the optimizer array after a voltage decrease, so that the parallel impedance to ground of the photovoltaic array and the photovoltaic inverter can be accurately detected, thereby ensuring accuracy and reliability of insulation impedance detection, in this way, grid connection safety and reliability of the photovoltaic inverter are improved.

With reference to the first aspect, in an implementation, the controller is further configured to control the optimizer array to output a decreased output voltage to the photovoltaic inverter after preset duration.

Based on the foregoing solution, after controlling the output voltage of the optimizer array to decrease, the controller controls the optimizer array to delay outputting the decreased output voltage to the photovoltaic inverter, so that the controller can avoid sampling an abnormal output voltage when sampling the output voltage of the optimizer array, thereby improving fault tolerance of ISO insulation impedance detection to some extent, and improving grid connection safety and reliability of the photovoltaic inverter.

With reference to the first aspect, in an implementation, the photovoltaic inverter further includes a third resistor and a first switch that are connected in parallel. The third resistor and the first resistor are connected in series between the positive electrode of the direct current bus and the protection ground cable, or the third resistor and the second resistor are connected in series between the protection ground cable and the negative electrode of the direct current bus. The controller is further configured to: when the output voltage of the optimizer array is less than or equal to the bus voltage, or the difference between the negative bus voltage and the bus voltage is less than the preset threshold, control the first switch to be turned off, to obtain a first negative bus voltage; and after obtaining the first negative bus voltage, control the first switch to be turned on, to obtain a second negative bus voltage.

Based on the foregoing solution, when the output voltage of the optimizer array is less than or equal to the bus voltage, or the difference between the negative bus voltage and the bus voltage is less than the preset threshold, the controller may normally perform ISO insulation impedance detection. The controller controls the first switch to be turned off, and obtains the bus voltage and the first negative bus voltage. After obtaining the first negative bus voltage, the controller is further configured to control the first switch to be in a turned-on state, to obtain the second negative bus voltage between the protection ground cable and the negative electrode of the direct current bus. The controller determines the insulation impedance to ground of the photovoltaic array based on an impedance value of the first resistor, an impedance value of the second resistor, an impedance value of the third resistor, the bus voltage, the first negative bus voltage, and the second negative bus voltage, and the insulation impedance to ground of the photovoltaic array may also be considered as the parallel impedance to ground of the photovoltaic array and the photovoltaic inverter. The controller may control, based on the detected parallel impedance to ground, the inverter circuit to be connected to or not to be connected to the power grid. For example, when the parallel impedance to ground meets a grid connection standard, the controller controls the inverter circuit to be connected to the power grid; or when the parallel impedance to ground does not meet the grid connection standard, the controller controls the inverter circuit not to be connected to the power grid. Therefore, grid connection safety and reliability of the photovoltaic inverter are improved.

With reference to the first aspect, in an implementation, the controller is further configured to: when a ratio of the negative bus voltage to a positive bus voltage is greater than or equal to a ratio threshold, control the output of the inverter circuit to establish a connection to the power grid, where the positive bus voltage is an absolute value of a voltage difference between the positive electrode of the direct current bus and the protection ground cable. The controller is further configured to: when the ratio of the negative bus voltage to the positive bus voltage is less than the ratio threshold, control the output of the inverter circuit to be disconnected from the power grid.

Based on the foregoing solution, the parallel impedance to ground of the photovoltaic inverter and the photovoltaic array may be equivalent to the ratio of the negative bus voltage to the positive bus voltage. The controller may control, based on the ratio and the ratio threshold, the photovoltaic inverter to be connected to or not connected to the power grid, which is also referred to as that the photovoltaic inverter is connected to or not connected to the power grid. Therefore, grid connection safety and reliability of the photovoltaic inverter can be improved.

According to a second aspect, a control method of a photovoltaic inverter is provided, and is applied to the photovoltaic inverter. The method includes: controlling, when a preset condition is met, an output voltage of an optimizer array to decrease, where the preset condition includes at least one of the following: a difference between a negative bus voltage and a bus voltage is greater than or equal to a preset threshold, or the output voltage of the optimizer array is greater than the bus voltage, where the bus voltage is an absolute value of a voltage difference between a positive electrode of a direct current bus and a negative electrode of the direct current bus, and the negative bus voltage is an absolute value of a voltage difference between a protection ground cable and the negative electrode of the direct current bus; and the photovoltaic inverter includes a Boost circuit, an input of the Boost circuit is configured to connect to the optimizer array, a positive output of the Boost circuit is connected to the positive electrode of the direct current bus, a negative output of the Boost circuit is connected to the negative electrode of the direct current bus, the first resistor is connected between the positive electrode of the direct current bus and the protection ground cable, the second resistor is connected between the protection ground cable and the negative electrode of the direct current bus, an input of the inverter circuit is separately connected to the positive electrode of the direct current bus and the negative electrode of the direct current bus, and an output of the inverter circuit is configured to connect to a power grid or a load.

With reference to the second aspect, in an implementation, when the difference between the negative bus voltage and the bus voltage is greater than or equal to the preset threshold, the method further includes: outputting a first control signal, where the first control signal indicates a voltage adjustment coefficient of the optimizer array to decrease, so that the difference between the negative bus voltage and the bus voltage is less than the preset threshold.

With reference to the second aspect, in an implementation, when the voltage adjustment coefficient is less than a preset coefficient and the difference between the negative bus voltage and the bus voltage is greater than or equal to the preset threshold, the method further includes: controlling the output of the inverter circuit to be disconnected from the power grid.

With reference to the second aspect, in an implementation, when the output voltage of the optimizer array is greater than the bus voltage, the method further includes: outputting a second control signal, where the second control signal indicates the output voltage of the optimizer array to decrease to be less than or equal to the bus voltage.

With reference to the second aspect, in an implementation, the method further includes: controlling the optimizer array to output a decreased output voltage to the photovoltaic inverter after preset duration.

With reference to the second aspect, in an implementation, the photovoltaic inverter further includes a third resistor and a first switch that are connected in parallel. The third resistor and the first resistor are connected in series between the positive electrode of the direct current bus and the protection ground cable, or the third resistor and the second resistor are connected in series between the protection ground cable and the negative electrode of the direct current bus. When the output voltage of the optimizer array is less than or equal to the bus voltage, or the difference between the negative bus voltage and the bus voltage is less than the preset threshold, the method further includes: when the difference between the negative bus voltage and the bus voltage is less than the preset threshold, controlling a first switch to be turned off, to obtain a first negative bus voltage; and after obtaining the first negative bus voltage, controlling the first switch to be turned on, to obtain a second negative bus voltage.

With reference to the second aspect, in an implementation, the method further includes: when a ratio of the negative bus voltage to a positive bus voltage is greater than or equal to a ratio threshold, controlling the output of the inverter circuit to establish a connection to the power grid, where the positive bus voltage is an absolute value of a voltage difference between the positive electrode of the direct current bus and the protection ground cable. When the ratio of the negative bus voltage to the positive bus voltage is less than the ratio threshold, controlling the output of the inverter circuit to be disconnected from the power grid.

According to a third aspect, a photovoltaic system is provided, where the photovoltaic system includes an optimizer array and a photovoltaic inverter, an input of the optimizer array is configured to connect to the photovoltaic array, an output of the optimizer array is connected to an input of the photovoltaic inverter, and the photovoltaic inverter includes a Boost circuit, a first resistor, a second resistor, a positive electrode of a direct current bus, a negative electrode of the direct current bus, an inverter circuit, and a controller. An input of the Boost circuit is configured to connect to the optimizer array, a positive output of the Boost circuit is connected to the positive electrode of the direct current bus, a negative output of the Boost circuit is connected to the negative electrode of the direct current bus, the first resistor is connected between the positive electrode of the direct current bus and a protection ground cable, the second resistor is connected between the protection ground cable and the negative electrode of the direct current bus, an input of the inverter circuit is separately connected to the positive electrode of the direct current bus and the negative electrode of the direct current bus, and an output of the inverter circuit is configured to connect to a power grid. The controller is configured to: control, when a preset condition is met, an output voltage of the optimizer array to decrease, where the preset condition includes at least one of the following: a difference between a negative bus voltage and a bus voltage is greater than or equal to a preset threshold, or the output voltage of the optimizer array is greater than the bus voltage. The bus voltage is an absolute value of a voltage difference between the positive electrode of the direct current bus and the negative electrode of the direct current bus, and the negative bus voltage is an absolute value of a voltage difference between the protection ground cable and the negative electrode of the direct current bus.

For descriptions of the second aspect and the third aspect in this application, refer to detailed descriptions of the first aspect. In addition, for beneficial effects of the second aspect and the third aspect, refer to analysis of beneficial effects of the first aspect. Details are not described herein again.

### BRIEF DESCRIPTION OF DRAWINGS

FIG. 1 is a diagram of an application scenario of a photovoltaic system;
FIG. 2 is an equivalent circuit diagram of detecting an insulation impedance to ground of a photovoltaic inverter;
FIG. 3 is a diagram of an application scenario of a photovoltaic system according to an embodiment of this application;
FIG. 4 is an equivalent circuit diagram of detecting an insulation impedance to ground of a photovoltaic inverter according to an embodiment of this application;
FIG. 5 is another equivalent circuit diagram of detecting an insulation impedance to ground of a photovoltaic inverter according to an embodiment of this application;
FIG. 6 is another equivalent circuit diagram of a photovoltaic inverter according to an embodiment of this application;
FIG. 7 is another equivalent circuit diagram of a photovoltaic inverter according to an embodiment of this application;
FIG. 8A and FIG. 8B are a flowchart of an insulation impedance detection method according to an embodiment of this application; and
FIG. 9 is a flowchart of another insulation impedance detection method according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The specific embodiments discussed are merely illustrative of specific ways to implement and use this application and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

In embodiments of this application, terms such as "first" and "second" are used to distinguish between objects with similar names, functions, or effects. A person skilled in the art may understand that the terms such as "first" and "second" do not limit a quantity and an execution sequence.

In this application, a word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described, the background of this application is first described.

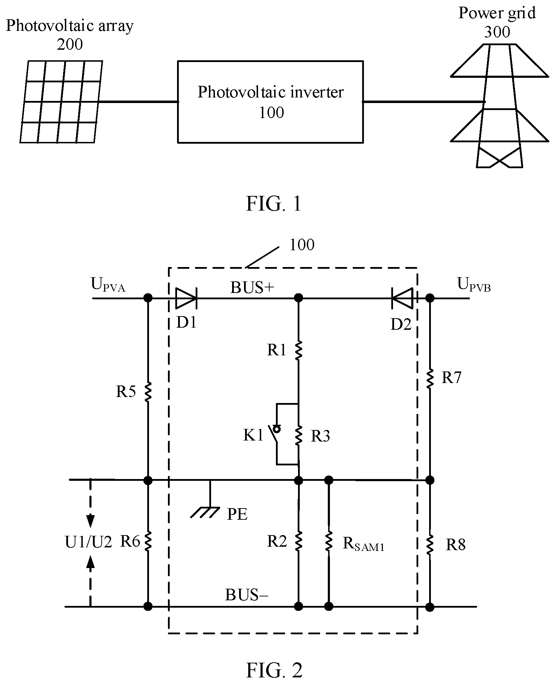

FIG. 1 is a diagram of an application scenario of a photovoltaic system. The photovoltaic system includes a photovoltaic inverter 100. An input of the photovoltaic inverter 100 is configured to connect to a photovoltaic array 200, and an output of the photovoltaic inverter 100 is configured to connect to a power grid 300. The photovoltaic array 200 includes at least one photovoltaic module. When the photovoltaic array 200 includes a plurality of photovoltaic modules, the plurality of photovoltaic modules may be connected in series, or connected in parallel, or some of the plurality of photovoltaic modules are connected in series, and the remaining photovoltaic modules are connected in parallel.

The photovoltaic inverter 100 is configured to convert a variable direct current generated by the photovoltaic module into a stable alternating current with a mains frequency, and is one of important components in the photovoltaic system. A string-type photovoltaic system is widely used due to its advantages of effectively considering individual differences of all photovoltaic modules, preventing shadow blocking and hot spot effect of the photovoltaic modules during operation. The hot spot effect refers to a phenomenon in which, under a specific condition, a shielded photovoltaic cell in the photovoltaic module is used as a load to consume energy generated by another photovoltaic cell that works normally, and the shielded photovoltaic cell heats up due to energy consumption.

In practice, a support of the photovoltaic module is usually a metal frame, and the metal frame is directly exposed outdoors, and is easily affected by bad weather. As a result, insulation of the photovoltaic module deteriorates over time, and a safety hazard like electric leakage occurs. Therefore, the photovoltaic inverter 100 needs to periodically perform ISO insulation impedance detection on the photovoltaic module to determine an insulation impedance to ground of the photovoltaic module, so as to detect an insulation fault and a safety hazard in the photovoltaic module in a timely manner, and ensure electrical safety of the photovoltaic system.

The following describes an ISO insulation impedance detection method with reference to an equivalent circuit of detecting an insulation impedance to ground of the photovoltaic inverter 100 shown in FIG. 2. For ease of illustration, FIG. 2 shows only a topology structure related to the ISO insulation impedance detection in the photovoltaic inverter 100.

As shown in FIG. 2, the photovoltaic inverter 100 includes a first resistor R1, a second resistor R2, a third resistor R3, a resistor R_{SAM1}, and a first switch K1. The first resistor R1 and the third resistor R3 are connected in series between a positive electrode BUS+ of a direct current bus of the photovoltaic inverter 100 and a protection ground cable PE, and the second resistor R2 is connected between the protection ground cable PE of the photovoltaic inverter 100 and a negative electrode BUS- of the direct current bus. The first switch K1 and the third resistor R3 are connected in parallel. The resistor R_{SAM1} is connected between the protection ground cable PE and the negative electrode BUS- of the direct current bus, and indicates an insulation impedance to ground of the photovoltaic inverter 100. For example, the switch K1 may be a relay.

As shown in FIG. 2, a fifth resistor R5, a sixth resistor R6, a seventh resistor R7, and an eighth resistor R8 may be considered as insulation impedances to ground of the photovoltaic array 200 shown in FIG. 1. For ease of description, an example in which the photovoltaic array 200 includes a first photovoltaic module and a second photovoltaic module is used for description. For example, the fifth resistor R5 and the sixth resistor R6 may be considered as insulation impedances to ground of the first photovoltaic module, and the seventh resistor R7 and the eighth resistor R8 may be considered as insulation impedances to ground of the second photovoltaic module.

The photovoltaic inverter 100 further includes a diode D1 and a diode D2. The diode D1 is configured to limit unidirectional transmission of a current generated by the first photovoltaic module to the positive electrode BUS+ of the direct current bus, and the diode D2 is configured to limit unidirectional transmission of a current generated by the second photovoltaic module to the positive electrode BUS+ of the direct current bus.

In the solution provided in this embodiment of this application, the first resistor R1, the second resistor R2, the third resistor R3, and the first switch K1 may be used to detect the insulation impedance to ground of the photovoltaic array 200.

Specifically, when the first switch K1 is turned off, according to a voltage equation and the Kirchhoff current law, impedance values of the fifth resistor R5, the sixth resistor R6, the seventh resistor R7, and the eighth resistor R8 meet the following relational expression: $\frac{{U}_{PVA} - U 1}{R 5} + \frac{{U}_{BUS} - U 1}{R 1 + R 3} + \frac{{U}_{PVB} - U 1}{R 1} = \frac{U 1}{R 6 / / R 2 / / {R}_{{SAM}_{1}} / / R 8}$

When the first switch K1 is turned on, the third resistor R3 is short-circuited. According to the voltage equation and the Kirchhoff current law, impedance values of the fifth resistor R5, the sixth resistor R6, the seventh resistor R7, the eighth resistor R8, and the resistor R_{SAM1} meet the following relational expression: $\frac{{U}_{PVA} - U 2}{R 5} + \frac{{U}_{BUS} - U 2}{R 1} + \frac{{U}_{PVB} - U 2}{R 7} = \frac{U 2}{R 6 / / R 2 / / {R}_{{SAM}_{1}} / / R 8}$

U_{PVA} is an output voltage of the first photovoltaic module, U_{PVB} is an output voltage of the second photovoltaic module, U_{BUS} is a voltage between the positive electrode BUS+ of the direct current bus and the negative electrode BUS- of the direct current bus, a first voltage U1 is a voltage between the protection ground cable PE and the negative electrode BUS- of the direct current bus when the first switch K1 is turned off, a second voltage U2 is a voltage between the protection ground cable PE and the negative electrode BUS- of the direct current bus when the first switch K1 is turned on, R1 to R3, R_{SAM1}, and R5 to R8 indicate impedance values of resistors, and "//" indicates that a calculation is performed according to a resistance parallel formula.

By combining the foregoing two relational expressions (1) and (2), it can be learned that a sum of reciprocals of the resistor R_{SAM1}, the fifth resistor R5, and the eighth resistor R8 meets the following relational expression: $\frac{1}{R 100} = \frac{1}{{R}_{{SAM}_{1}}} + \frac{1}{R 5} + \frac{1}{R 6} + \frac{1}{R 7} + \frac{1}{R 8} = \frac{{U}_{BUS} - \left(U1-U2\right)}{U 1 - U 2} \times \frac{1}{R 1 + R 3} - \frac{{U}_{BUS} + \left(U1-U2\right)}{U 1 - U 2} \times \frac{1}{R 1}$

According to the relational expression (3), a sum of reciprocals of R5, R6, R7, R8, and R_{SAM1} may be calculated, namely, a reciprocal of a parallel impedance to ground R100 of the photovoltaic array 200 and the photovoltaic inverter 100, where the parallel impedance to ground is a parallel impedance sum of the insulation impedance to ground of the first photovoltaic module in the photovoltaic array 200, the insulation impedance to ground of the second photovoltaic module, and the insulation impedance to ground of the photovoltaic inverter 100.

It can be learned that, in the photovoltaic inverter 100, a controller controls the first switch K1 to be turned on or off, so that an impedance value between the positive electrode BUS+ of the direct current bus and the protection ground cable PE can be changed, and a voltage between the protection ground cable PE and the negative electrode BUS- of the direct current bus in different states can be obtained based on different impedance values. Finally, the parallel impedance to ground of the photovoltaic array 200 and the photovoltaic inverter 100 may be obtained through calculation based on a bus voltage U_{BUS}, the first voltage U1, and the second voltage U2, and with reference to the impedance values of the first resistor R1 to the third resistor R3. The parallel impedance to ground may also be considered as the insulation impedance to ground of the photovoltaic array 200. When the insulation impedance to ground meets a requirement of the insulation impedance to ground of the photovoltaic array 200 in the international electrotechnical commission (international electrotechnical commission, IEC) 62109-2 grid connection standard, the controller controls the photovoltaic inverter 100 to be connected to a grid. When the insulation impedance to ground does not meet the requirement of the insulation impedance to ground of the photovoltaic array 200 in the IEC 62109-2 grid connection standard, the controller controls the photovoltaic inverter 100 not to be connected to the grid, to ensure grid connection safety of the photovoltaic inverter 100.

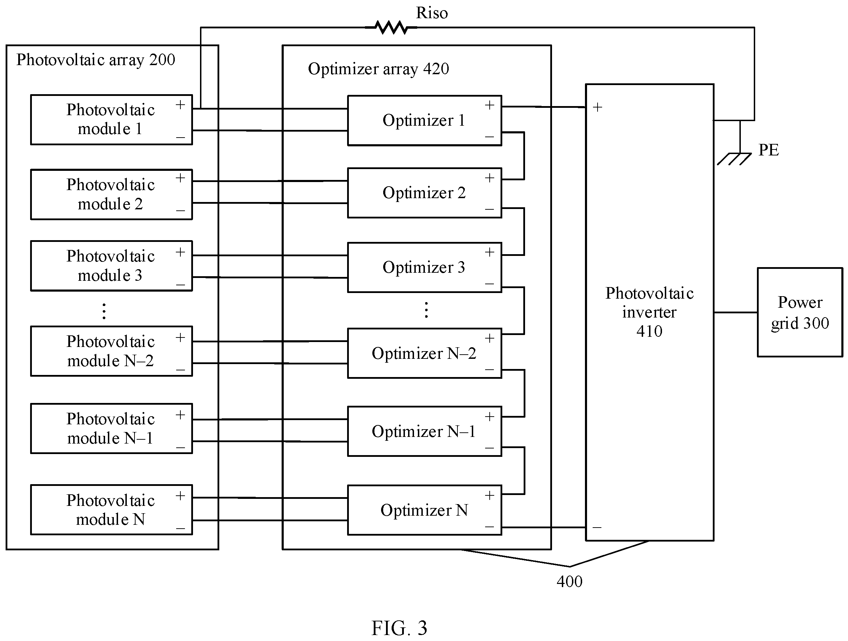

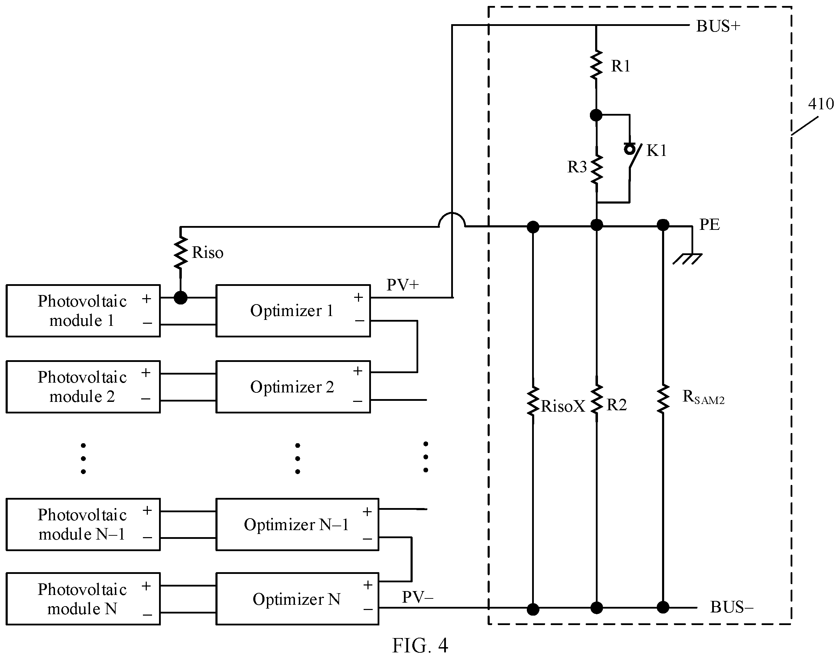

FIG. 3 is a diagram of an application scenario of a photovoltaic system 400 according to an embodiment of this application. FIG. 4 is an equivalent circuit diagram of detecting an insulation impedance to ground of a photovoltaic inverter 410 in FIG. 3. As shown in FIG. 3, the photovoltaic system 400 includes an optimizer array 420 and the photovoltaic inverter 410. An input of the optimizer array 420 is configured to connect to the photovoltaic array 200, an output of the optimizer array 420 is connected to an input of the photovoltaic inverter 410, and an output of the photovoltaic inverter 410 is configured to connect to a power grid 300. The optimizer is configured to perform refined management and optimization on an output of a photovoltaic module, to improve power generation efficiency, reliability, and stability of the photovoltaic system 400. For example, the optimizer may adjust an output voltage of the photovoltaic module based on a requirement of the photovoltaic system 400, so that the output voltage of the photovoltaic module is kept within a stable range, thereby providing a stable input voltage for the photovoltaic inverter 410, and ensuring stable running of the photovoltaic system 400. The photovoltaic inverter 410 is configured to: after performing power conversion on a direct current output by the optimizer, provide an alternating current to the power grid 300. In FIG. 3, an example in which the photovoltaic array 200 includes N photovoltaic modules and the optimizer array 420 includes N optimizers is used for description. The N photovoltaic modules are connected to the N optimizers in a one-to-one correspondence.

As shown in FIG. 3, in the N optimizers, a positive output of an optimizer 1 is connected to a positive electrode BUS+ of a direct current bus of the photovoltaic inverter 410, a negative output of the optimizer 1 is connected to a positive output of an optimizer 2, a negative output of the optimizer 2 is connected to a positive output of an optimizer 3, and so on. A negative output of an optimizer N-2 is connected to a positive output of an optimizer N-1, a negative output of the optimizer N-1 is connected to a positive output of an optimizer N, and a negative output of the optimizer N is connected to a negative electrode BUS- of the direct current bus the photovoltaic inverter 410.

As shown in FIG. 3, a resistor Riso connected between the photovoltaic array 200 and a protection ground cable PE is the parallel impedance to ground of the photovoltaic array 200 and the photovoltaic inverter 410 described above, and may also be considered as the insulation impedance to ground of the photovoltaic array 200. As shown in FIG. 4, a resistor RisoX connected between a protection ground cable PE and a negative electrode BUS- of a direct current bus is a system internal resistance of the photovoltaic inverter 410.

In the scenarios shown in FIG. 3 and FIG. 4, when the photovoltaic system 400 includes the optimizer array 420, the output voltage of the photovoltaic module is increased to some extent. As a result, a voltage between the protection ground cable PE and the negative electrode BUS- of the direct current bus of the photovoltaic inverter 410 is greater than a voltage between the positive electrode BUS+ of the direct current bus of the photovoltaic inverter 410 and the negative electrode BUS- of the direct current bus. Consequently, the insulation impedance to ground of the photovoltaic array 200 cannot be accurately detected, and grid connection safety of the photovoltaic inverter 410 cannot be ensured.

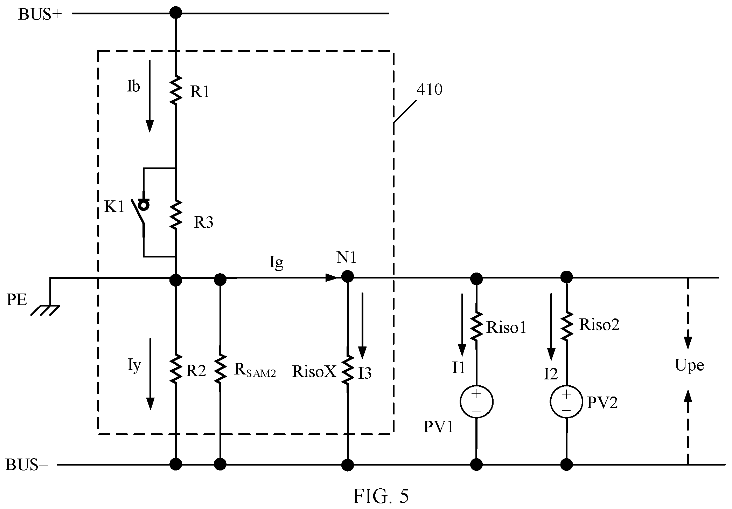

The following uses the scenarios shown in FIG. 3 and FIG. 4 as examples, and describes, with reference to an equivalent circuit of detecting an insulation impedance to ground of the photovoltaic inverter 410 shown in FIG. 5, a reason why the insulation impedance to ground of the photovoltaic array 200 cannot be accurately detected. For ease of illustration, FIG. 5 shows only a topology structure related to ISO insulation impedance detection in the photovoltaic inverter 410, and uses an example in which the photovoltaic array 200 includes a first photovoltaic module PV1 and a second photovoltaic module PV2 for description.

As shown in FIG. 5, the photovoltaic inverter 410 includes a first resistor R1, a second resistor R2, a third resistor R3, a resistor R_{SAM2}, and a first switch K1. For a connection relationship between components in the photovoltaic inverter 410, refer to FIG. 5 and the foregoing related descriptions. Details are not described herein again in this embodiment of this application.

As shown in FIG. 5, an insulation impedance to ground of the first photovoltaic module PV1 and an insulation impedance to ground of the second photovoltaic module PV2 are equivalent to an impedance between a protection ground cable PE and a negative electrode BUS- of a direct current bus, where a resistor Riso1 indicates the insulation impedance to ground of the first photovoltaic module PV1, a resistor Riso2 indicates the insulation impedance to ground of the second photovoltaic module PV2, and a resistor RisoX indicates a system internal resistance of the photovoltaic inverter 410. A voltage between the protection ground cable PE and the negative electrode BUS- of the direct current bus is indicated by Upe.

As shown in FIG. 5, flow directions of a current Ib, a current Iy, a current Ig, a current I1, a current I2, and a current I3 are further shown. The current Ib is a current flowing through the first resistor R1 and the third resistor R3, and the current Iy is a current flowing through the second resistor R2. The current Ig is a current flowing into a node N1, namely, a sum of the current I1, the current I2, and the current I3. The current I1 is a current flowing through the resistor Risol, the current I2 is a current flowing through the resistor Riso2, and the current I3 is a current flowing through the resistor RisoX.

Specifically, when the first switch K1 is turned off, according to the voltage equation and the Kirchhoff current law, the current Ig meets the following relational expression: $Ig 1 = \frac{Upe 1 - Upv 1}{Riso 1} + \frac{Upe 1 - Upv 2}{Riso 2} + \frac{Upe 1}{RisoX}$

When the first switch K1 is turned on, the third resistor R3 is short-circuited. According to the voltage equation and the Kirchhoff current law, Ig meets the following relational expression: $Ig 2 = \frac{Upe 2 - Upv 1}{Riso 1} + \frac{Upe 2 - Upv 2}{Riso 2} + \frac{Upe 2}{RisoX}$

*Upv1* is an output voltage of the first photovoltaic module, Upv2 is an output voltage of the second photovoltaic module, *Ig1* is a current flowing into the node N1 when the first switch K1 is turned off, *Upe1* is a voltage when the first switch K1 is turned off, *Ig2* is a current flowing into the node N1 when the first switch K1 is turned on, and *Upe2* is a voltage when the first switch K1 is turned off. Risol, Riso2, and RisoX indicate impedance values of the resistors.

The following relationship can be obtained by subtracting the two relationships (4) and (5) from each other: $\frac{1}{Riso 1} + \frac{1}{Riso 2} + \frac{1}{RisoX} = \frac{Ig 2 - Ig 1}{Upe 2 - Upe 1}$

After a reciprocal of the system internal resistance RisoX of the photovoltaic inverter 410 is subtracted, the relational expression (6) is a reciprocal of a parallel impedance of the insulation impedance to ground Riso1 of the first photovoltaic module PV1 and the insulation impedance to ground Riso2 of the second photovoltaic module PV2, namely, a reciprocal of the insulation impedance to ground Riso of the photovoltaic array 200. In addition, it may also be determined, according to the relational expression (6), that there is no relationship between the insulation impedance to ground of the photovoltaic array 200 and an absolute value of an output voltage of the photovoltaic array 200.

In the application scenario of the photovoltaic system 400 shown in FIG. 3, when a voltage of the photovoltaic module is high, a voltage Upe (or referred to as a common mode voltage) between the protection ground cable PE and the negative electrode BUS- of the direct current bus is greater than or equal to the voltage (namely, a BUS voltage) between the positive electrode BUS+ of the direct current bus and the negative electrode BUS- of the direct current bus of the photovoltaic inverter 410. In this scenario, a value of the current Ib is negative, that is, the current Ib may reverse, which may cause a case in which Ig2<Igl, that is, a current after the first switch K1 is turned on is less than a current before the first switch K1 is turned on. However, in existing ISO insulation impedance detection logic, it is considered that a scenario in which ΔIg=Ig2-Ig1<0 does not exist, that is, the current after the first switch K1 is turned on is definitely greater than the current before the first switch K1 is turned on. In a case in which it is considered that the scenario does not exist, the photovoltaic inverter cannot complete insulation impedance detection when Ig2<Igl, and the photovoltaic inverter 410 may output an incorrect insulation impedance value, and cannot detect a real and reliable insulation impedance to ground of the photovoltaic array 200. As a result, grid connection safety of the photovoltaic inverter 410 cannot be ensured.

To resolve this problem, this embodiment of this application provides the photovoltaic inverter 410. Before performing ISO insulation impedance detection, the photovoltaic inverter 410 can control the output voltage of the optimizer array 420, so that a problem that the parallel impedance to ground of the photovoltaic array 200 and the photovoltaic inverter 410 cannot be accurately detected in a complex scenario can be resolved, and the photovoltaic inverter 410 can be controlled, based on the parallel impedance to ground, to be safely connected to a grid, thereby improving grid connection safety and reliability of the photovoltaic inverter 410.

The following describes the technical solutions in embodiments of this application with reference to the accompanying drawings in embodiments of this application.

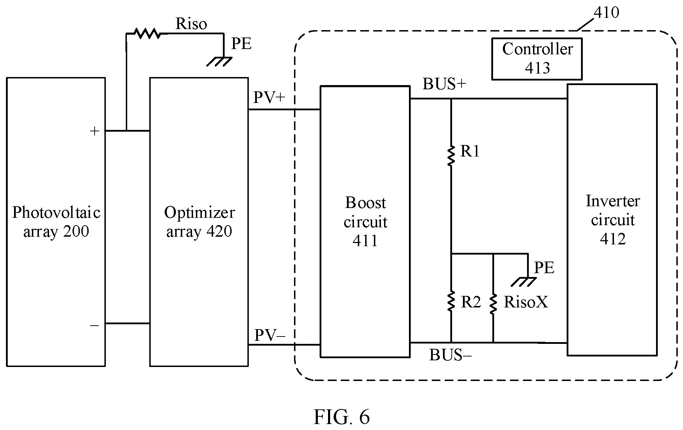

FIG. 6 is an equivalent circuit diagram of the photovoltaic inverter 410 according to an embodiment of this application. The photovoltaic inverter 410 includes a Boost circuit 411, a first resistor R1, a second resistor R2, a positive electrode BUS+ of a direct current bus, a negative electrode BUS- of the direct current bus, an inverter circuit 412, and a controller 413.

An input of the Boost circuit 411 is configured to connect to an optimizer array 420, a positive output of the Boost circuit 411 is connected to the positive electrode BUS+ of the direct current bus, a negative output of the Boost circuit 411 is connected to the negative electrode BUS- of the direct current bus, the first resistor R1 is connected between the positive electrode BUS+ of the direct current bus and a protection ground cable PE, the second resistor R2 is connected between the protection ground cable PE and the negative electrode BUS- of the direct current bus, two input ends of the inverter circuit 412 are respectively connected to the positive electrode BUS+ of the direct current bus and the negative electrode BUS- of the direct current bus, and an output of the inverter circuit 412 is configured to connect to a power grid 300.

For a circuit topology of the Boost circuit 411, refer to a circuit topology of a Boost circuit in the related technology. For a circuit topology of the inverter circuit 412, refer to a circuit topology of an inverter circuit in the related technology. Details are not described in this embodiment of this application.

As shown in FIG. 6, a parallel impedance to the ground of a photovoltaic array 200 and the photovoltaic inverter 410 is equivalently indicated by using a resistor Riso, and may also be considered as an insulation impedance to the ground of the photovoltaic array 200. The resistor Riso is connected between the photovoltaic array 200 and the protection ground cable PE. As shown in FIG. 6, a resistor RisoX connected between the protection ground cable PE and the negative electrode BUS- of the direct current bus is a system internal resistance of the photovoltaic inverter 410. The first resistor R1 and the second resistor R2 are configured to detect the parallel impedance to ground of the photovoltaic inverter 410 and the photovoltaic array 200.

Before ISO insulation impedance detection, the controller 413 is configured to obtain a negative bus voltage and a bus voltage. A bus voltage U_{BUS} is an absolute value of a voltage difference between the positive electrode BUS+ of the direct current bus and the negative electrode BUS- of the direct current bus, a negative bus voltage Upe is an absolute value of a voltage difference between the protection ground cable PE and the negative electrode BUS- of the direct current bus, and the negative bus voltage Upe may also be referred to as a common mode voltage Upe.

For a specific process in which the controller 413 obtains the bus voltage U_{BUS} and the negative bus voltage Upe, refer to the related technology. Details are not described herein in this embodiment of this application.

In an embodiment, after the negative bus voltage Upe and the bus voltage U_{BUS} are obtained, the controller 413 is further configured to control, when a preset condition is met, an output voltage of the optimizer array 420 to decrease. The preset condition includes at least one of the following: a difference between the negative bus voltage Upe and the bus voltage U_{BUS} is greater than or equal to a preset threshold, or the output voltage of the optimizer array 420 is greater than the bus voltage U_{BUS}. For example, the controller 413 may output a control signal to the optimizer array 420 when the preset condition is met, and the control signal may indicate the output voltage of the optimizer array 420 to decrease.

The preset threshold is a voltage threshold of a difference between the negative bus voltage Upe and the bus voltage U_{BUS}. The preset threshold is related to an impedance of the photovoltaic system 400 and detection precision. A higher preset threshold indicates higher detection precision. A specific value of the preset threshold is not limited in this embodiment of this application. For example, the preset threshold may be 10 V. That is, when Upe-U_{BUS}≥10 V, the controller 413 outputs a control signal to the optimizer array 420, to indicate the output voltage of the optimizer array 420 to decrease, so that Upe-U_{BUS}<10 V. Alternatively, the preset threshold may be 20 V. That is, when Upe-U_{BUS}≥20 V, the controller 413 outputs a control signal to the optimizer array 420, to indicate the output voltage of the optimizer array 420 to decrease, so that Upe-U_{BUS}<20 V. The preset threshold may alternatively be 0 V. That is, when Upe-U_{BUS}≥O, the controller 413 outputs a control signal to the optimizer array 420, to indicate the output voltage of the optimizer array 420 to decrease, so that Upe<U_{BUS}.

When the voltage difference between the negative bus voltage Upe and the bus voltage U_{BUS} is greater than or equal to the preset threshold, it indicates that a current voltage is abnormal, and the parallel impedance to ground of the photovoltaic array 200 and the photovoltaic inverter 410 cannot be accurately detected. The difference between the negative bus voltage Upe and the bus voltage U_{BUS} needs to be decreased first, and then ISO insulation detection is performed. When the difference between the negative bus voltage Upe and the bus voltage U_{BUS} is less than the preset threshold, it indicates that the output voltage of the optimizer array 420 is normal, and ISO insulation impedance detection can be normally performed.

In an embodiment, when the difference between the negative bus voltage Upe and the bus voltage U_{BUS} is greater than or equal to the preset threshold, the controller 413 may output a first control signal to the optimizer array 420, where the first control signal indicates a voltage adjustment coefficient of the optimizer array to decrease, so that the difference between the negative bus voltage Upe and the bus voltage U_{BUS} is less than the preset threshold.

After receiving the first control signal, the optimizer array 420 decreases the voltage adjustment coefficient based on the indication of the first control signal, to decrease an amplitude of the output voltage, so that a difference between the negative bus voltage Upe of the photovoltaic inverter 410 and the bus voltage U_{BUS} is decreased until the difference is less than the preset threshold. After receiving the output voltage decreased by the optimizer, the photovoltaic inverter 410 may perform ISO insulation impedance detection on the parallel impedance to ground of the photovoltaic array 200 and the photovoltaic inverter 410 by using the foregoing detection logic, to avoid a detection failure to some extent.

For example, after receiving the first control signal, the optimizer array 420 decreases the voltage adjustment coefficient from 1 to 0.7 based on the indication of the first control signal. In other words, the output voltage of the optimizer array 420 is decreased to 70% of the original output voltage. In this case, if the difference between the negative bus voltage Upe and the bus voltage U_{BUS} is less than the preset threshold, the controller 413 may perform ISO insulation impedance detection. If the difference between the negative bus voltage Upe and the bus voltage U_{BUS} is still greater than or equal to the preset threshold, the controller 413 outputs the first control signal to the optimizer array 420 again. After receiving the first control signal, the optimizer array 420 may control the voltage adjustment coefficient of the optimizer array 420 to decrease from 0.7 to 0.5, and the output voltage of the optimizer array 420 is decreased to 50% of the original output voltage.

In this way, the decrease of the output voltage of the optimizer array 420 can be controlled by controlling the voltage adjustment coefficient of the optimizer array 420, to decrease the difference between the negative bus voltage and the bus voltage, thereby improving accuracy and reliability of ISO insulation impedance detection.

In an embodiment, the controller 413 is further configured to: when the voltage adjustment coefficient is less than the preset coefficient, and the difference between the negative bus voltage Upe and the bus voltage U_{BUS} is greater than or equal to the preset threshold, control the output of the inverter circuit 412 to be disconnected from a power grid.

The preset coefficient is an ultimate voltage adjustment coefficient of the optimizer array 420. For example, the preset coefficient may be 0.5. That is, after the controller 413 controls the voltage adjustment coefficient of the optimizer array 420 to decrease to 0.5, if the difference between the negative bus voltage Upe and the bus voltage U_{BUS} is still greater than or equal to the preset threshold, it indicates that a current voltage is abnormal, and normal ISO insulation impedance detection cannot be performed. The controller 413 may control the inverter circuit 412 to be disconnected from the power grid, and send alarm information, to ensure grid connection safety and reliability of a grid-connected inverter.

In another embodiment, the controller 413 is further configured to output a second control signal if the output voltage of the optimizer array 420 is greater than the bus voltage U_{BUS}, where the second control signal indicates the output voltage of the optimizer array 420 to decrease to be less than or equal to the bus voltage U_{BUS}.

For example, after obtaining the bus voltage U_{BUS}, the controller 413 may directly output the second control signal to the optimizer array 420, to control the output voltage of the optimizer array 420 to decrease. In this case, the controller 413 does not need to calculate the difference between the negative bus voltage Upe and the bus voltage U_{BUS}. When determining that the photovoltaic system 400 includes the optimizer array 420, the controller 413 may directly control the output voltage of the optimizer array 420 to decrease until the output voltage of the optimizer array 420 is less than or equal to the bus voltage U_{BUS}. The photovoltaic inverter 410 receives the output voltage decreased by the optimizer array 420, and may perform ISO insulation impedance detection on the parallel impedance to ground of the photovoltaic array 200 and the photovoltaic inverter 410 by using the foregoing detection logic, so that a detection failure can be avoided to some extent.

Specifically, the controller 413 obtains the negative bus voltage Upe and the bus voltage U_{BUS}, and can use the negative bus voltage Upe and the bus voltage U_{BUS} as a reference to determine whether the output voltage of the optimizer array 420 needs to be adjusted, to minimize a risk of an ISO insulation impedance detection failure. In addition, after obtaining the negative bus voltage Upe and the bus voltage U_{BUS}, the controller 413 may calculate the parallel impedance to ground of the photovoltaic array 200 and the photovoltaic inverter 410, to control, based on the parallel impedance to ground, the photovoltaic inverter 410 to connect to or not connect to a grid.

In the photovoltaic inverter 410 provided in this embodiment of this application, the controller 413 may sample the negative bus voltage Upe and the bus voltage U_{BUS} before insulation impedance detection, and output a control signal to the optimizer array 420 based on the obtained negative bus voltage Upe and bus voltage U_{BUS}, when the difference between the negative bus voltage Upe and the bus voltage U_{BUS} is greater than or equal to the preset threshold or the output voltage of the optimizer array 420 is greater than the bus voltage U_{BUS}, to control the output voltage of the optimizer array 420 to decrease. Then, ISO insulation impedance detection is performed based on the output voltage of the optimizer array 420 after the voltage is decreased, so that ISO insulation impedance detection can be performed in a complex scenario in which the optimizer array 420 is included in the photovoltaic system 400 at an optimal hardware circuit design cost, that is, by using fewer circuit devices. In comparison with the conventional technology in which detection and determining logic considers that there is no case in which the negative bus voltage Upe is greater than the bus voltage U_{BUS}, in this application, when the photovoltaic array 200 is connected to the optimizer array 420, the output voltage of the optimizer array 420 is adjusted, so that the parallel impedance to ground of the photovoltaic array 200 and the photovoltaic inverter 410 can be accurately detected, thereby ensuring accuracy and reliability of insulation impedance detection, and improving grid connection safety and reliability of the photovoltaic inverter 410.

In an embodiment, the controller 413 is further configured to control the optimizer array 420 to output a decreased output voltage to the photovoltaic inverter 410 after preset duration.

The preset duration is duration of deferring, by the optimizer array 420, an output of the output voltage after the output voltage is decreased. The preset duration is related to a communication link between the photovoltaic inverter 410 and the optimizer array 420, an execution speed of the controller 413, and an execution speed of the controller 413 in the optimizer array 420. A specific value of the preset duration is not limited in this embodiment of this application. For example, the preset duration may be 10s, that is, after decreasing the output voltage, the optimizer array 420 delays 10s in outputting the decreased output voltage to the photovoltaic inverter 410. Alternatively, the preset duration may be 20s, that is, after decreasing the output voltage, the optimizer array 420 delays 20s in outputting the decreased output voltage to the photovoltaic inverter 410.

Therefore, because the optimizer array 420 further needs corresponding processing time in a process of decreasing the output voltage, after controlling the output voltage of the optimizer array 420 to be decreased, the controller 413 controls the optimizer array 420 to delay outputting the decreased output voltage to the photovoltaic inverter 410, so that the controller 413 can avoid sampling an abnormal output voltage when sampling the output voltage of the optimizer array 420. In this way, fault tolerance of ISO insulation impedance detection can be improved to some extent, and grid connection safety and reliability of the photovoltaic inverter 410 can be improved.

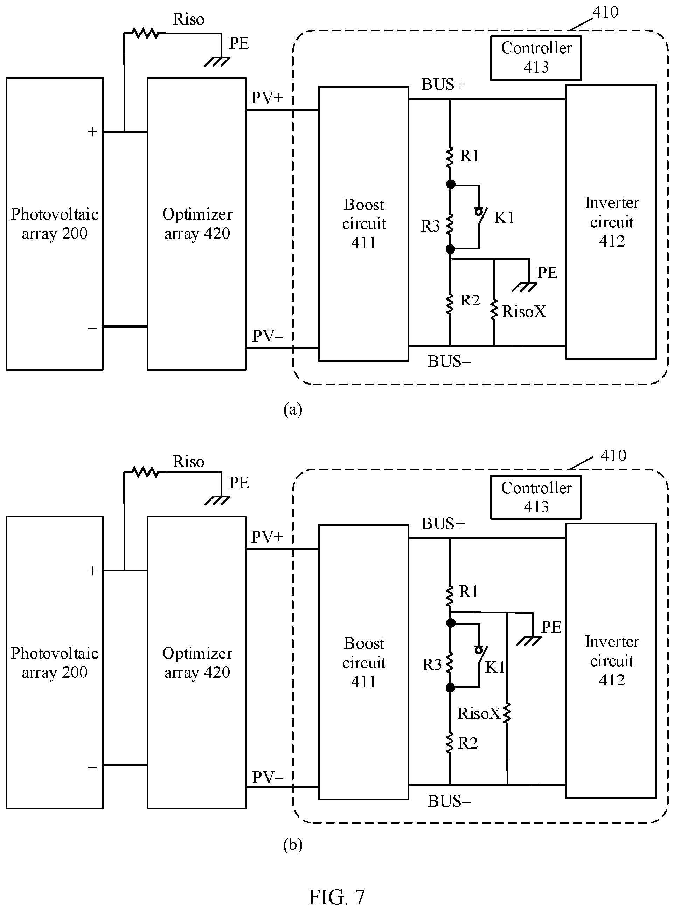

In an embodiment, as shown in FIG. 7, the photovoltaic inverter 410 further includes a third resistor R3 and a first switch K1 that are connected in parallel. As shown in (a) in FIG. 7, the third resistor R3 and the first resistor R1 are connected in series between the positive electrode BUS+ of the direct current bus and the protection ground cable PE. Alternatively, as shown in (b) in FIG. 7, the third resistor R3 and the second resistor R2 are connected in series between the protection ground cable PE and the negative electrode BUS- of the direct current bus.

Optionally, a type of the first switch K1 includes a relay, an insulated gate bipolar transistor, or a metal-oxide-semiconductor field-effect transistor. A specific type of the first switch K1 is not limited in embodiments of this application. In this embodiment of this application, an example in which the first switch K1 is a relay is used for description.

The controller 413 is further configured to: when the output voltage of the optimizer array 420 is less than or equal to the bus voltage U_{BUS}, or the difference between the negative bus voltage Upe and the bus voltage U_{BUS} is less than the preset threshold, control the first switch K1 to be turned off, to obtain a first negative bus voltage Upel, and after obtaining the first negative bus voltage Upel, control the first switch K1 to be turned on, to obtain a second negative bus voltage Upe2.

Specifically, when the output voltage of the optimizer array 420 is less than or equal to the bus voltage U_{BUS}, or the difference between the negative bus voltage Upe and the bus voltage U_{BUS} is less than the preset threshold, the controller 413 may normally perform ISO insulation impedance detection. The controller 413 controls the first switch K1 to be turned off, to obtain the bus voltage U_{BUS} and the first negative bus voltage Upe1. After obtaining the first negative bus voltage Upel, the controller 413 is further configured to control the first switch K1 to be in a turned-on state, to obtain the second negative bus voltage Upe2 between the protection ground cable PE and the negative electrode BUS- of the direct current bus. An impedance value of the first resistor R1, an impedance value of the second resistor R2, an impedance value of the third resistor R3, the bus voltage U_{BUS}, the first negative bus voltage Upel, and the second negative bus voltage Upe2 are used to determine the insulation impedance to ground Riso of the photovoltaic array 200, and may also be considered as the parallel impedance to ground of the photovoltaic array 200 and the photovoltaic inverter 410. The photovoltaic inverter 410 may calculate the parallel impedance to ground of the photovoltaic array 200 and the photovoltaic inverter 410 in a manner of calculating the parallel impedance to ground related to FIG. 2. For a specific process, refer to a specific process of performing insulation impedance detection by using a single relay in the related technology. Details are not described herein in this embodiment of this application.

In an embodiment, the controller 413 is further configured to: when a ratio of the negative bus voltage Upe to the positive bus voltage is greater than or equal to a ratio threshold, control the output of the inverter circuit 412 to establish a connection to the power grid, where the positive bus voltage is an absolute value of a voltage difference between the positive electrode BUS+ of the direct current bus and the protection ground cable PE. The controller 413 is further configured to: when the ratio of the negative bus voltage Upe to the positive bus voltage is less than the ratio threshold, control the output of the inverter circuit 412 to be disconnected from the power grid. The ratio threshold is related to a requirement on insulation impedance corresponding to the photovoltaic inverter 410 in a grid connection standard. A specific value of the ratio threshold is not limited in this embodiment of this application.

For example, the ratio of the negative bus voltage Upe to the positive bus voltage may be equivalent to the parallel impedance to ground of the photovoltaic inverter 410 and the photovoltaic array 200. The controller 413 may control, based on the ratio and the ratio threshold, the photovoltaic inverter 410 to connect to or not connect to the grid, thereby improving safety of the photovoltaic inverter 410.

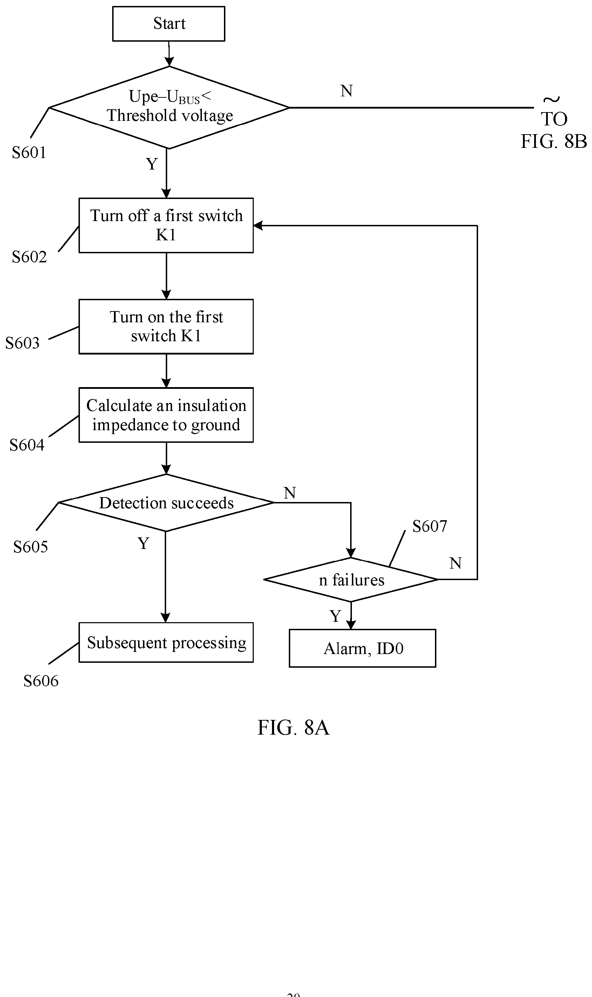

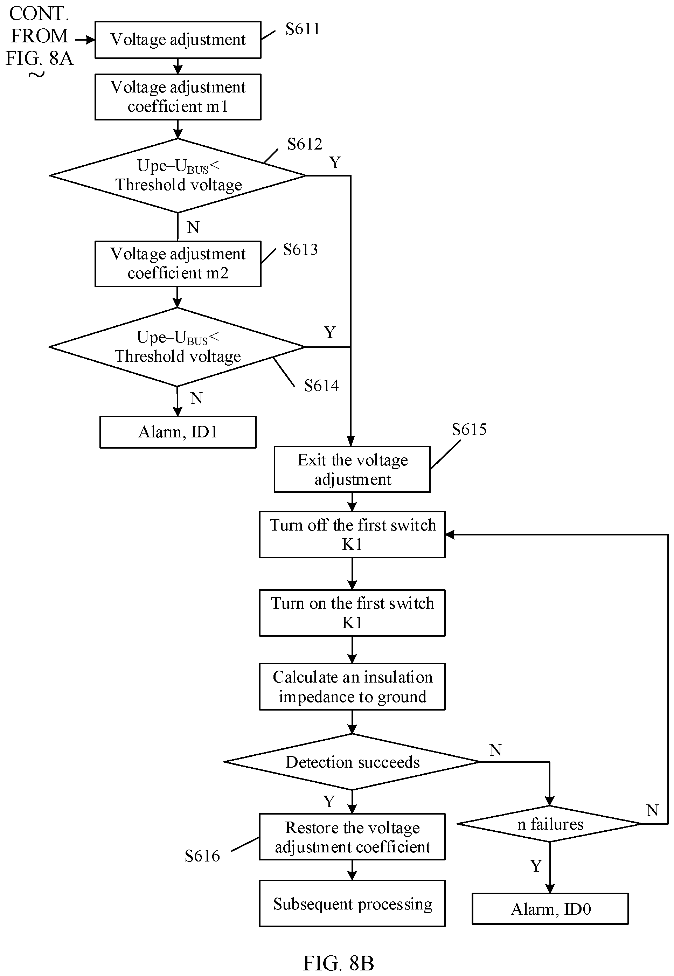

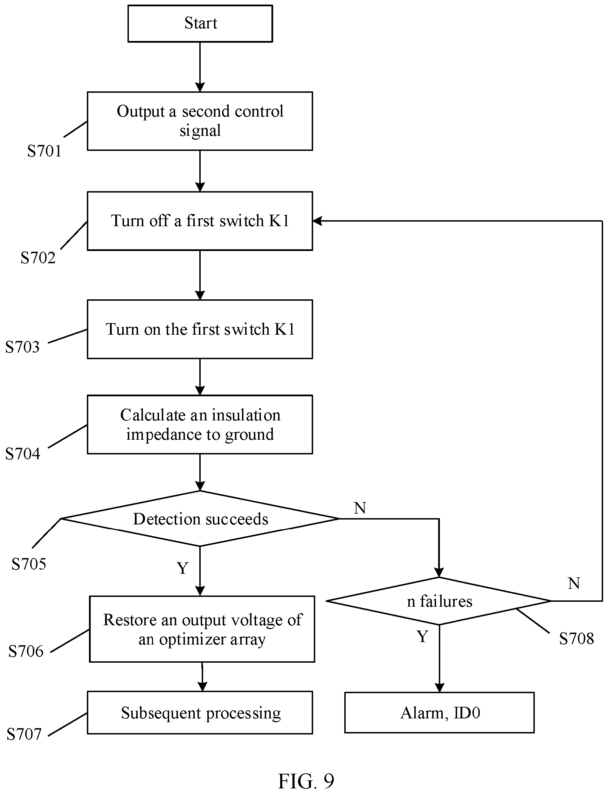

With reference to flowcharts shown in FIG. 8A, FIG. 8B and FIG. 9, the following describes in detail the insulation impedance detection method provided in embodiments of this application by using the circuit topology shown in FIG. 7 as an example.

FIG. 8A and FIG. 8B show an insulation impedance detection method according to an embodiment of this application. The method includes detection steps S601 to S607 and S611 to S616. S601 to S607 are steps of performing insulation impedance detection without voltage adjustment, and S611 to S616 are steps of performing insulation impedance detection when a voltage is abnormal. For example, the detection steps may be implemented by the controller 413 and the controller in the optimizer array 420.

S601: Determine whether a difference between the negative bus voltage and the bus voltage is less than a preset threshold. If the difference is less than the preset threshold, it indicates that the common-mode voltage Upe is normal, and the detection step S602 can be normally performed. Otherwise, it indicates that the common-mode voltage Upe is abnormal, and voltage adjustment needs to be performed on the optimizer array 420. In this case, step 611 is performed.

S602 to S604: Control the first switch K1 to be turned off, to obtain a first negative bus voltage, control the first switch K1 to be turned on, to obtain a second negative bus voltage, and calculate an insulation impedance to ground based on the first negative bus voltage, the second negative bus voltage, the bus voltage, and a related impedance value.

S605: Determine whether detection succeeds. If the controller 413 normally outputs an insulation impedance value, it is considered that the detection succeeds, and step S606 is performed. If the controller 413 cannot normally output the insulation impedance value, it is considered that an exception occurs in the detection, and step S607 is performed.

S606: Perform subsequent processing. After the insulation impedance value is output, if the impedance value meets a grid connection requirement, the controller 413 controls the inverter circuit 412 to establish a connection to the power grid 300. If the impedance value does not meet the grid connection requirement, the controller 413 controls the inverter circuit 412 to be disconnected from the power grid 300.

S607: The detection fails. For example, if a quantity of detection failures is less than n, steps S602 to S604 are performed again. If the quantity of detection failures is greater than or equal to n, the controller 413 controls the inverter circuit 412 to be disconnected from the power grid 300, and sends alarm information. The alarm information may be first alarm information ID0, and the first alarm information ID0 indicates that the quantity of detection failures has exceeded a threshold quantity of times when a detection voltage is normal. n indicates a threshold of detection failures. For example, n may be 4. When the quantity of detection failures exceeds 4, the controller 413 controls the inverter circuit 412 to be disconnected from the power grid 300, and sends alarm information.

S611: Perform voltage adjustment, and decrease a voltage adjustment coefficient of the optimizer array 420 to m1. For example, m1 indicates a first voltage adjustment coefficient of the optimizer array 420, for example, m1=0.7.

S612: Determine whether the difference between the negative bus voltage and the bus voltage is less than the preset threshold. If the difference is less than the preset threshold, it indicates that the common-mode voltage Upe is normal, and step S615 is performed. Otherwise, it indicates that the common-mode voltage Upe is abnormal, and the voltage still needs to be adjusted again, and step S613 is performed.

S613: Perform voltage adjustment, and decrease the voltage adjustment coefficient of the optimizer array 420 to m2. m2 indicates a second voltage adjustment coefficient of the optimizer array 420, and m2<m1. For example, m2=0.5.

S614: Determine whether the difference between the negative bus voltage and the bus voltage is less than the preset threshold. If the difference is less than the preset threshold, it indicates that the common-mode voltage Upe is normal, and step S615 is performed. Otherwise, it indicates that the common-mode voltage Upe is abnormal. If the voltage adjustment coefficient is adjusted to a limit voltage adjustment coefficient of the optimizer array 420, and the common-mode voltage Upe is still abnormal, normal ISO insulation impedance detection cannot be performed. The controller 413 may control the inverter circuit 412 to be disconnected from the power grid 300, and send alarm information. The alarm information may be second alarm information ID1, and the second alarm information ID1 indicates that a current voltage adjustment coefficient of the optimizer array 420 is close to a voltage adjustment limit of the optimizer array 420, and a normal voltage still cannot be detected.

S615: Exit the voltage adjustment. In this case, it indicates that the output voltage of the optimizer array 420 has been decreased to a proper amplitude, and the detection step can be normally performed. For specific detection steps, refer to S602 to S605.

S616: Restore the voltage adjustment coefficient. After it is determined that the detection succeeds, it indicates that the insulation impedance detection is completed, and the controller 413 may further output a signal for recovering the voltage adjustment coefficient to the optimizer array 420, to control the output voltage of the optimizer array 420 to recover to a voltage before the detection.

FIG. 9 shows another insulation impedance detection method according to an embodiment of this application. The method includes steps S701 to S708.

S701: Control an output voltage of the optimizer array 420 to decrease. For example, the controller 413 outputs a second control signal to the optimizer array 420, to control the output voltage of the optimizer array 420 to be less than or equal to a bus voltage.

S702 to S704: Control the first switch K1 to be turned off, obtain a first negative bus voltage, control the first switch K1 to be turned on, obtain a second negative bus voltage, and calculate an insulation impedance to ground based on the first negative bus voltage, the second negative bus voltage, the bus voltage, and a related impedance value.

S705: Determine whether detection succeeds. If the controller 413 normally outputs an insulation impedance value, it is considered that the detection succeeds, and steps S706 and S707 are performed. If the controller 413 cannot normally output the insulation impedance value, it is considered that an exception occurs in the detection, and step S708 is performed.

S706: Restore the output voltage of the optimizer array 420. After determining that the detection succeeds, the controller 413 is further configured to output a control signal for recovering the output voltage to the optimizer array 420, to control the output voltage of the optimizer array 420 to recover to a voltage before the detection.

S707: Perform subsequent processing. After the insulation impedance value is output, if the impedance value meets a grid connection requirement, the controller 413 controls the inverter circuit 412 to establish a connection to the power grid 300. If the impedance value does not meet the grid connection requirement, the controller 413 controls the inverter circuit 412 to be disconnected from the power grid 300.

S708: The detection fails. For example, if a quantity of detection failures is less than n, steps S602 to S604 are performed again. If the quantity of detection failures is greater than or equal to n, the controller 413 controls the inverter circuit 412 to be disconnected from the power grid 300, and sends alarm information. The alarm information may be first alarm information ID0, and the first alarm information ID0 indicates that the quantity of detection failures has exceeded a threshold quantity of times when a detection voltage is normal. n indicates a threshold of detection failures. For example, n may be 4. When the quantity of detection failures exceeds 4, the controller 413 controls the inverter circuit 412 to be disconnected from the power grid 300, and sends alarm information.

An embodiment of this application further provides a photovoltaic inverter control method. The control method may be applied to the photovoltaic inverter 410 shown in FIG. 6 or FIG. 7. The method includes the following steps.

S901: When a preset condition is met, control an output voltage of an optimizer array to decrease, where the preset condition includes at least one of the following: a difference between a negative bus voltage Upe and a bus voltage U_{BUS} is greater than or equal to a preset threshold, or the output voltage of the optimizer array is greater than the bus voltage U_{BUS}. The bus voltage U_{BUS} is an absolute value of a voltage difference between a positive electrode BUS+ of a direct current bus and a negative electrode BUS- of the direct current bus, and the negative bus voltage Upe is an absolute value of a voltage difference between a protection ground cable PE and the negative electrode BUS- of the direct current bus.

For example, before S901, the method further includes S900.

S900: Obtain the negative bus voltage U_{pc} and the bus voltage U_{BUS}.

For a specific process of obtaining the bus voltage U_{BUS} and the negative bus voltage Upe, refer to the related technology. Details are not described herein in this embodiment of this application.

An embodiment of this application further provides a photovoltaic system. A circuit topology of the photovoltaic system may be a circuit topology of the photovoltaic system 400 shown in FIG. 3. The photovoltaic system 400 includes the optimizer array 420 and the photovoltaic inverter 410. An input of the optimizer array 420 is configured to connect to the photovoltaic array 200, an output of the optimizer array 420 is connected to an input of the photovoltaic inverter 410, and an output of the photovoltaic inverter 410 is configured to connect to the power grid 300. As shown in FIG. 3, in this embodiment of this application, an example in which the optimizer array 420 includes N optimizers and the photovoltaic array 200 includes N photovoltaic modules is used for description. The photovoltaic inverter 410 may be the photovoltaic inverter shown in either of FIG. 6 and FIG. 7.

The foregoing detailed descriptions and beneficial effect analyses of the photovoltaic inverter 410 may be correspondingly cited in the control method of a photovoltaic inverter 410 and the photovoltaic system 400. Details are not described herein again in embodiments of this application.

Finally, it should be noted that the foregoing descriptions are merely specific implementations of this application, but are not intended to limit the protection scope of this application. Any variation or replacement within a technical scope disclosed in this application shall fall within the protection scope of this application. Therefore, the protection scope of this application shall be subject to the protection scope of the claims.

## Claims

1. A photovoltaic inverter, wherein the photovoltaic inverter comprises a boost Boost circuit, a first resistor, a second resistor, a positive electrode of a direct current bus, a negative electrode of the direct current bus, an inverter circuit, and a controller;
an input of the Boost circuit is configured to connect to an optimizer array, a positive output of the Boost circuit is connected to the positive electrode of the direct current bus, a negative output of the Boost circuit is connected to the negative electrode of the direct current bus, the first resistor is connected between the positive electrode of the direct current bus and a protection ground cable, the second resistor is connected between the protection ground cable and the negative electrode of the direct current bus, an input of the inverter circuit is separately connected to the positive electrode of the direct current bus and the negative electrode of the direct current bus, and an output of the inverter circuit is configured to connect to a power grid; and
the controller is configured to control, when a preset condition is met, an output voltage of the optimizer array to decrease, wherein the preset condition comprises at least one of the following: a difference between a negative bus voltage and a bus voltage is greater than or equal to a preset threshold, or the output voltage of the optimizer array is greater than the bus voltage, wherein the bus voltage is an absolute value of a voltage difference between the positive electrode of the direct current bus and the negative electrode of the direct current bus, and the negative bus voltage is an absolute value of a voltage difference between the protection ground cable and the negative electrode of the direct current bus.

2. The photovoltaic inverter according to claim 1, wherein
the controller is specifically configured to: when the difference between the negative bus voltage and the bus voltage is greater than or equal to the preset threshold, output a first control signal, wherein the first control signal indicates a voltage adjustment coefficient of the optimizer array to decrease, so that the difference between the negative bus voltage and the bus voltage is less than the preset threshold.

3. The photovoltaic inverter according to claim 2, wherein
the controller is further configured to control, when the voltage adjustment coefficient is less than a preset coefficient, and the difference between the negative bus voltage and the bus voltage is greater than or equal to the preset threshold, the output of the inverter circuit to be disconnected from the power grid.

4. The photovoltaic inverter according to claim 1, wherein
the controller is specifically configured to: when the output voltage of the optimizer array is greater than the bus voltage, output a second control signal, wherein the second control signal indicates the output voltage of the optimizer array to decrease to be less than or equal to the bus voltage.

5. The photovoltaic inverter according to any one of claims 1 to 4, wherein
the controller is further configured to control the optimizer array to output a decreased output voltage to the photovoltaic inverter after preset duration.

6. The photovoltaic inverter according to any one of claims 1 to 5, wherein the photovoltaic inverter further comprises a third resistor and a first switch that are connected in parallel; and the third resistor and the first resistor are connected in series between the positive electrode of the direct current bus and the protection ground cable, or the third resistor and the second resistor are connected in series between the protection ground cable and the negative electrode of the direct current bus;
the controller is further configured to control, when the output voltage of the optimizer array is less than or equal to the bus voltage, or the difference between the negative bus voltage and the bus voltage is less than the preset threshold, the first switch to be turned off, to obtain a first negative bus voltage; and
the controller is further configured to control, after obtaining the first negative bus voltage, the first switch to be turned on, to obtain a second negative bus voltage.

7. The photovoltaic inverter according to claim 6, wherein
the controller is further configured to control, when a ratio of the negative bus voltage to a positive bus voltage is greater than or equal to a ratio threshold, the output of the inverter circuit to establish a connection to the power grid, wherein the positive bus voltage is an absolute value of a voltage difference between the positive electrode of the direct current bus and the protection ground cable; and
the controller is further configured to control, when the ratio of the negative bus voltage to the positive bus voltage is less than the ratio threshold, the output of the inverter circuit to be disconnected from the power grid.

8. A control method of a photovoltaic inverter, applied to the photovoltaic inverter, wherein the method comprises:
controlling, when a preset condition is met, an output voltage of an optimizer array to decrease, wherein the preset condition comprises at least one of the following: a difference between a negative bus voltage and a bus voltage is greater than or equal to a preset threshold, or the output voltage of the optimizer array is greater than the bus voltage, wherein the bus voltage is an absolute value of a voltage difference between a positive electrode of a direct current bus and a negative electrode of the direct current bus, and the negative bus voltage is an absolute value of a voltage difference between a protection ground cable and the negative electrode of the direct current bus; and
the photovoltaic inverter comprises a Boost circuit, an input of the Boost circuit is configured to connect to the optimizer array, a positive output of the Boost circuit is connected to the positive electrode of the direct current bus, a negative output of the Boost circuit is connected to the negative electrode of the direct current bus, a first resistor is connected between the positive electrode of the direct current bus and the protection ground cable, a second resistor is connected between the protection ground cable and the negative electrode of the direct current bus, an input of an inverter circuit is separately connected to the positive electrode of the direct current bus and the negative electrode of the direct current bus, and an output of the inverter circuit is configured to connect to a power grid.

9. The control method according to claim 8, wherein when the difference between the negative bus voltage and the bus voltage is greater than or equal to the preset threshold, the method further comprises:
outputting a first control signal, wherein the first control signal indicates a voltage adjustment coefficient of the optimizer array to decrease, so that the difference between the negative bus voltage and the bus voltage is less than the preset threshold.

10. The control method according to claim 9, wherein when the voltage adjustment coefficient is less than a preset coefficient, and the difference between the negative bus voltage and the bus voltage is greater than or equal to the preset threshold, the method further comprises:
controlling the output of the inverter circuit to be disconnected from the power grid.

11. The control method according to claim 8, wherein when the output voltage of the optimizer array is greater than the bus voltage, the method further comprises:
outputting a second control signal, wherein the second control signal indicates the output voltage of the optimizer array to decrease to be less than or equal to the bus voltage.

12. The control method according to any one of claims 8 to 11, wherein the method further comprises:
controlling the optimizer array to output a decreased output voltage to the photovoltaic inverter after preset duration.

13. The control method according to any one of claims 8 to 12, wherein the photovoltaic inverter further comprises a third resistor and a first switch that are connected in parallel; and the third resistor and the first resistor are connected in series between the positive electrode of the direct current bus and the protection ground cable, or the third resistor and the second resistor are connected in series between the protection ground cable and the negative electrode of the direct current bus; and
when the output voltage of the optimizer array is less than or equal to the bus voltage, or the difference between the negative bus voltage and the bus voltage is less than the preset threshold, the method further comprises:
when the difference between the negative bus voltage and the bus voltage is less than the preset threshold, controlling the first switch to be turned off, to obtain a first negative bus voltage; and
after obtaining the first negative bus voltage, controlling the first switch to be turned on, to obtain a second negative bus voltage.

14. The control method according to claim 13, wherein the method further comprises:
when a ratio of the negative bus voltage to a positive bus voltage is greater than or equal to a ratio threshold, controlling the output of the inverter circuit to establish a connection to the power grid, wherein the positive bus voltage is an absolute value of a voltage difference between the positive electrode of the direct current bus and the protection ground cable; and
when the ratio of the negative bus voltage to the positive bus voltage is less than the ratio threshold, controlling the output of the inverter circuit to be disconnected from the power grid.

15. A photovoltaic system, wherein the photovoltaic system comprises an optimizer array and a photovoltaic inverter, an input of the optimizer array is configured to connect to a photovoltaic array, an output of the optimizer array is connected to an input of the photovoltaic inverter, and the photovoltaic inverter comprises a Boost circuit, a first resistor, a second resistor, a positive electrode of a direct current bus, a negative electrode of the direct current bus, an inverter circuit, and a controller;
an input of the Boost circuit is configured to connect to the output of the optimizer array, a positive output of the Boost circuit is connected to the positive electrode of the direct current bus, a negative output of the Boost circuit is connected to the negative electrode of the direct current bus, the first resistor is connected between the positive electrode of the direct current bus and a protection ground cable, the second resistor is connected between the protection ground cable and the negative electrode of the direct current bus, an input of the inverter circuit is separately connected to the positive electrode of the direct current bus and the negative electrode of the direct current bus, and an output of the inverter circuit is configured to connect to a power grid; and
the controller is configured to control, when a preset condition is met, an output voltage of the optimizer array to decrease, wherein the preset condition comprises at least one of the following: a difference between a negative bus voltage and a bus voltage is greater than or equal to a preset threshold, or the output voltage of the optimizer array is greater than the bus voltage, wherein the bus voltage is an absolute value of a voltage difference between the positive electrode of the direct current bus and the negative electrode of the direct current bus, and the negative bus voltage is an absolute value of a voltage difference between the protection ground cable and the negative electrode of the direct current bus.
